(19) Europäisches Patentamt
European Patent Office
Office européen des brevets

(11) **EP 2 905 593 B1**

(12) **EUROPÄISCHE PATENTSCHRIFT**

(45) Veröffentlichungstag und Bekanntmachung des
Hinweises auf die Patenterteilung:
**28.12.2016 Patentblatt 2016/52**

(51) Int Cl.:
***G01L 9/00*** *(2006.01)*   ***G01L 9/02*** *(2006.01)*
***G01L 19/00*** *(2006.01)*   ***G01L 19/02*** *(2006.01)*
***G01L 9/12*** *(2006.01)*

(21) Anmeldenummer: **14195036.0**

(22) Anmeldetag: **26.11.2014**

(54) **Druckmessgerät mit automatischer Lagekorrektur**

Pressure measuring device with automatic position adjustment

Manomètre doté d'une correction de position automatique

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **07.02.2014 DE 102014101573**

(43) Veröffentlichungstag der Anmeldung:
**12.08.2015 Patentblatt 2015/33**

(73) Patentinhaber: **VEGA Grieshaber KG
77709 Wolfach (DE)**

(72) Erfinder: **Jacob, Jörn
77709 Wolfach (DE)**

(74) Vertreter: **Westphal, Mussgnug & Partner
Patentanwälte mbB
Am Riettor 5
78048 Villingen-Schwenningen (DE)**

(56) Entgegenhaltungen:
**WO-A1-2009/101566     US-A1- 2010 154 552
US-A1- 2013 305 840**

EP 2 905 593 B1

## Beschreibung

Die vorliegende Erfindung betrifft einen Druckmessumformer nach Patentanspruch 1, sowie ein Verfahren zum Bestimmen des Drucks mit einem Druckmessumformer nach Patentanspruch 7.

Bei der Messung des Drucks mit Druckmessgeräten gibt es, bedingt durch die Einbaulage des Druckmessgeräts immer einen sogenannten Lagefehler, der sich, bedingt durch die Ausrichtung der Druckmesszelle in einem Fehler bei der Messung des Drucks äußert. Dieser Fehler kommt dadurch zustande, dass, je nach Einbaulage das Eigengewicht der Messmembran, beziehungsweise bei ölgefüllten Systemen zusätzlich der hydrostatische Druck des Öls vor der Messmembran mitgemessen wird. Bei keramisch kapazitiven Messzellen ist dieser Fehler zum Beispiel mit 0,2 mbar relativ klein, kann aber bei kleinen Messbereichen beispielsweise im Bereich von 100 mbar, die Messgenauigkeit des Geräts bereits deutlich überschreiten.

Bei Druckmittlersystemen ist diese Fehler in der Regel größer, beispielsweise kann ein ölgefülltes System je nach Abstand der Druckmittlermembran zum Messelement einen Lagefehler von bis zu einigen Millibar aufweisen. Entscheidend dafür ist die Höhe der Ölsäule. So ergibt sich beispielsweise bei einer Höhe der Ölfüllung von 5 cm und einer Dichte des Öls von 0,8 g/cm$^3$ ein maximaler Lagefehler, der sich aus der zweifachen Höhe der Ölfüllung, multipliziert mit der Dichte des Öls und der Erdbeschleunigung von 9,81 m/s$^2$ zu einem Wert von 7,8 mbar aufmultipliziert. Der Faktor 2 rührt daher, dass, wenn die Messmembran in Richtung auf die Erdanziehungskraft weisend ausgerichtet ist, das Gewicht der Ölsäule auf die Messmembran drückt, wenn hingegen die Messmembran in die entgegengesetzte Richtung ausgerichtet ist, das Gewicht der Ölsäule die Messmembran in die entgegengesetzte Richtung auslenkt.

In der Regel werden alle Druckmessgeräte mit der Einbaulage, bei der die Membran nach unten in Richtung der Erdanziehungskraft weist, kalibriert. Der Einbau beim Kunden erfolgt aber in allen möglichen Einbaulagen und nur sehr selten in der gleichen Einbaulage wie die Kalibrierung. Dies hat zur Folge, dass der Kunde manuell eine Lagekorrektur durchführen muss. Im drucklosen eingebauten Zustand muss dazu eine entsprechende Bedienfunktion im Gerät ausgeführt werden, bei welcher der Nullpunkt entsprechend korrigiert wird. Bei Relativdruckgeräten zeigt das Gerät danach 0 mbar an. Bei Absolutdruckgeräten ist es nicht so einfach möglich, die Lage zu korrigieren, da zur Korrektur der Lage das Gerät vollständig evakuiert werden müsste, oder der exakte Umgebungsdruck bekannt sein müsste, wobei dieser oft nur mit einem Referenzgerät ermittelt werden kann. Beides bedeutet für den Kunden großen Zusatzaufwand, oder ist technisch in der Anwendung gar nicht möglich.

Die WO2009/101566 A1 offenbart ein Verfahren zur Bestimmung des Korrekturwertes einer Messung eines Drucksensors, bei dem unterschiedliche Orientierungen des Drucksensors kompensiert werden. Die Druckschrift US2010/0154552 A1 beschreibt ein kapazitives Druckmeßgerät mit einem Neigungssensor, bei dem die Abhängigkeit der gemessenen Werte von dem Neigungswinkel des Drucksensors berücksichtigt wird. Weiteren Stand der Technik offenbart die US 2013/0305840 A1.

Aufgabe der Erfindung ist es daher, ein Verfahren zur Bestimmung des Drucks zur Verfügung zu stellen, in welchem der Lagefehler automatisch korrigiert wird.

Diese Aufgabe wird durch ein Verfahren zum Bestimmen des Drucks nach Patentanspruch 1 Vorteilhafte Ausführungsformen sind in den jeweiligen Unteransprüchen offenbart.

Der zur Durchführung des Verfahrens verwendete Druckmessumformer weist eine Druckmesszelle auf, wenigstens einen Lagesensor sowie eine Auswerteinheit, welche wenigstens eine Signalverarbeitungseinheit, sowie eine Lagekorrektureinheit zur Ermittlung eines Lagefehlers umfasst. Dabei ist der wenigstens eine Lagesensor relativ zur Druckmesszelle unbeweglich angeordnet und die Druckmesszelle ist mit der Signalverarbeitungseinheit elektrisch verbunden. Der wenigstens eine Lagesensor ist elektrisch mit der Lagekorrektureinheit verbunden, wobei von der Signalverarbeitungseinheit ein, aus einem von der Druckmesszelle bereitgestellten Signal ermitteltes erstes Signal bereitgestellt wird, von dem Lagesensor ein zweites Signal bereitgestellt wird und von der Lagekorrektureinheit ein aus dem ersten und dem zweiten Signal ermitteltes Ausgangssignal bereitgestellt wird. Mit einem solchen Druckmessumformer ist es möglich, den einbaulageabhängigen Lagefehler zu korrigieren.

Der wenigstens eine Lagesensor ist vorteilhafterweise an der Druckmesszelle mit einem Fixiermittel, beispielsweise einem Kleber, einer Schraubverbindung oder einer Schweiß- oder Lötverbindung befestigt, oder unmittelbar in diese integriert. Dadurch wird die relative Lage des Lagesensors zur Druckmesszelle an oder in der Druckmesszelle bereits fixiert, sodass die Druckmesszelle als eigenständige, weitergebildete Einheit zusammen mit dem fixierten Lagesensor vertrieben werden kann. Der wenigstens eine Lagesensor ist ein Beschleunigungssensor. Ein Beschleunigungssensor ermöglicht die Messung von Bewegungskräften, die auf die Druckmesszelle einwirken und kann beispielsweise auch plötzliche Bewegungen oder Stöße, die die Druckmesszelle treffen, registrieren, sodass, wenn solche plötzlichen Bewegungskräfte aufgezeichnet werden, rückwirkend beispielsweise bestimmt werden kann, ob die Druckmesszelle zu Boden gefallen ist oder anderen Stößen ausgesetzt war. Werden diese Ereignisse protokolliert, so kann bei Fehlfunktionen auf die Ursache rückgeschlossen werden und beispielsweise mit einem solchen Protokoll bestimmt werden, ob ein Gewährleistungsfall vorliegt oder nicht.

Die Druckmesszelle weist vorteilhafterweise wenigstens zwei Lagesensoren auf, die relativ zueinander so angeordnet sind, dass der Neigungswinkel zwischen der Richtung der Erdanziehungskraft und der Richtung der drucksensitiven Fläche der Druckmesszelle, beispielsweise der Membran, in jeder Neigungsrichtung der Druckmesszelle bestimmbar ist. Die Druckmesszelle ist dabei vorteilhafterweise eine kapazitive Druckmesszelle, die drucksensitive Fläche ist vorzugsweise eine Membran.

In einer der erfindungsgemäßen Ausführungsformen kann das Ausgangssignal mit einer Funkeinheit elektrisch verbunden sein und über diese kommunizieren. Auch das erste und/oder das zweite Signal können mit einer Funkeinheit elektrisch verbunden sein. Eine Funkeinheit ermöglicht eine drahtlose Kommunikation beispielsweise zwischen der Auswerteeinheit und/ oder dem, vorzugsweise als Neigungssensor ausgebildeten Lagesensor und der Druckmesszelle, und/oder zwischen dem Druckmessumformer und einer vom Druckumformer beabstandeten Anlagenperipherie. Dies kann sinnvoll sein, wenn aufgrund äußerer Umgebungsbedingungen, wie beispielsweise sehr hohen Drucken, hohen Temperaturen, aggressiven Atmosphären oder Ähnlichem eine Funkeinheit einer elektrischen Leitung vorzuziehen ist.

Das erfinderische Verfahren zum Bestimmen des Drucks mit einem solchen Druckmessumformer weist die folgenden Verfahrensschritte auf: Zunächst wird der auf die Druckmesszelle einwirkende Druck gemessen, und das von der Druckmesszelle erzeugte Messsignals an eine Signalverarbeitungseinheit weitergeleitet.

In der Signalverarbeitungseinheit wird daraufhin ein erstes Signals aus dem Messsignal erzeugt und an eine Lagekorrektureinheit weitergeleitet. Parallel dazu, vorher oder nachher kann die Lage der Druckmesszelle relativ zu einer Ausgangslage der Druckmesszelle mit einem, relativ zur Druckmesszelle unbeweglich angeordneten Lagesensor gemessen und ermittelt werden. Zu diesem Zweck kann von dem Lagesensor ein zweites Signal aus der ermittelten Lage erzeugt und an die Lagekorrektureinheit weitergeleitet werden. Wenn der Lagekorrektureinheit sowohl das erste, als auch das zweite Signal zur Verfügung stehen, kann in der Lagekorrektureinheit aus diesen beiden Signalen ein korrigiertes Ausgangssignal ermittelt und zur Weiterverarbeitung bereitgestellt werden. Das Ausgangssignal gibt dann den berichtigten Druckwert weiter, beispielsweise an eine Anzeigeeinheit oder an eine andere Einheit.

Optional kann auch noch aus dem zweiten Signal mittels einer in der Lagekorrektureinheit hinterlegten Kennlinie, oder mittels eines in der Lagekorrektureinheit hinterlegten Korrekturalgorithmus oder Korrekturwertes, beispielsweise in Form einer Korrekturtabelle, aus der relativen Lage des Druckmesssensors ein Lagefehler ermittelt werden.

Die Ausgangslage wird vorteilhafterweise in einem ersten Verfahrensschritt, dadurch bestimmt, dass die drucksensitive Fläche der Druckmesszelle nach unten, in Richtung der Erdanziehungskraft weisend ausgerichtet wird und in dieser Position der auf die Membran wirkende Druck bestimmt wird. Die Druckmesszelle kann, vorzugsweise zu Beginn des Verfahrens, vorteilhafterweise vor ihrem endgültigen Einbau in dieser Ausgangslage kalibriert werden, sodass der Druck nach dem endgültigen Einbau, in einer von der Ausgangslage abweichenden Einbauposition mit relativ einfachen in der Lagekorrektureinheit vorgesehenen Korrekturmitteln korrigiert werden kann.

Ein maximaler Lagefehler wird erfindungsgemäß aus der Differenz zwischen dem gemessenen Druck der Druckmesszelle in der weiter oben beschriebenen Ausgangslage, also in der Lage, in welcher die drucksensitive Fläche der Druckmesszelle nach unten in Richtung der Erdanziehungskraft weist, und dem gemessenen Druck der Druckmesszelle in einer zur Ausgangslage um 180° gedrehten Lage der Druckmesszelle bestimmt. Damit wird, bei identischen Umgebungsbedingungen sowohl der minimal auf die Druckmesszelle wirkende Druck als auch der maximal auf die Druckmesszelle wirkende Druck ermittelt und der maximale Lagefehler dadurch festgelegt.

Der Winkel zwischen der bevorzugten Ausgangslage, also der Richtung in die die Erdanziehungskraft wirkt, und einer aktuellen Richtung, also einer Richtung, in welche die drucksensitive Fläche der Druckmesszelle weist, ist der sogenannte Lagewinkel. Der Lagefehler wird als Funktion dieses Lagewinkels aus dem Wert ermittelt, der sich ergibt, wenn der halbe Wert des maximalen Lagefehlers multipliziert mit dem Kosinus des Lagewinkels vom halben Wert des maximalen Lagefehlers abgezogen wird. Diese Relation zwischen dem Lagewinkel und dem Lagefehler ermöglicht in vielen Fällen die exakte Bestimmung des auf die Zelle wirkenden Drucks, unabhängig von der aktuellen Richtung, in welche die drucksensitive Fläche, also beispielsweise die Membran der Druckmesszelle, weist. Der Winkel wird über den Lagesensor ermittelt und die beschriebene Relation kann beispielsweise als Kennlinie oder als Korrekturalgorithmus in der Lagekorrektureinheit hinterlegt sein.

Das Ausgangssignal und/oder das zweite Signal können, vorzugsweise als Funktion der Zeit, abgespeichert werden. Durch Auslesen eines solchen Speichers, in welchem vorzugsweise die einzelnen Ereignisse als Funktion der Zeit eingetragen sind, kann beispielsweise, da der Lagesensor als Beschleunigungssensor ausgebildet ist, überprüft werden, ob bei einer Fehlfunktion ein garantieauslösendes Ereignis vorliegt. Ist nämlich beispielsweise der Druckmessumformer während des Betriebs heruntergefallen oder durch Stoß beschädigt worden, so kann der Beschleunigungssensor einen abrupten Abbremsvorgang detektieren, der, wenn er in einen Speicher, vorzugsweise in einen nicht löschbaren Speicher eingeschrieben wird, dieses Ereignis dokumentieren kann. Verfügt der Druckmessumformer über eine eigene Spannungs- oder Stromversorgung, die auch während eines Transports den Druckmessumformer mit Energie versorgt, können sogar Transportschäden detektiert und dokumentiert werden.

Die Erfindung wird nachfolgend anhand von drei Zeichnungen näher erläutert.

Es zeigen:

Figur 1     ein Beispiel eines Druckmessumformers,

Figur 2     eine mögliche Relation zwischen einem Einbauwinkel relativ zur Richtung der Erdanziehungskraft und einem daraus ermittelten Lagefehler,

Figur 3     eine Druckmesszelle, die mit einem Lagewinkel α relativ zur Ausgangslage angeordnet ist.

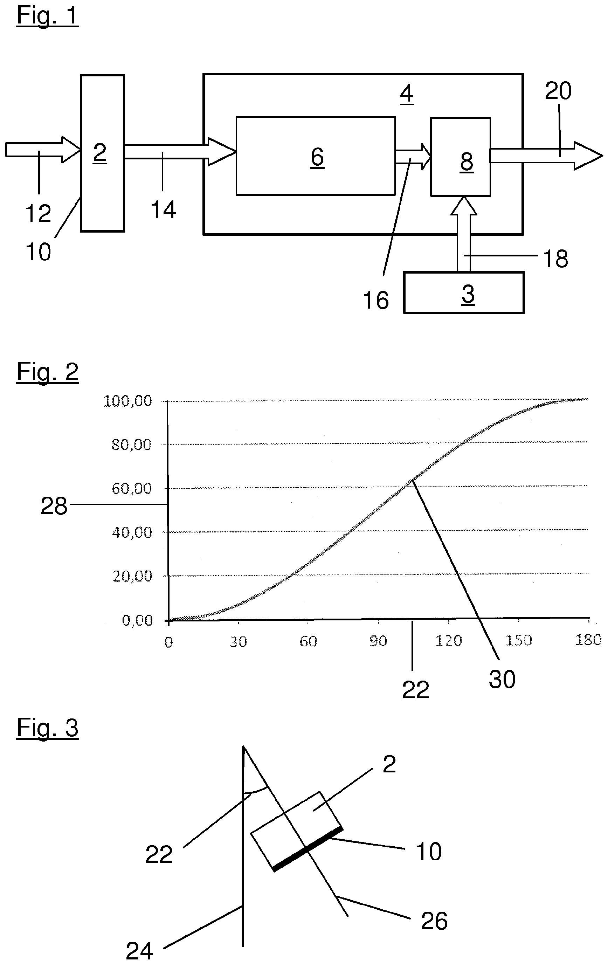

Figur 1 zeigt einen Druckmessumformer 1, der eine Druckmesszelle 2, einen Lagesensor 3 sowie eine Auswerteeinheit 4 aufweist. Die Auswerteeinheit 4 weist eine Signalverarbeitungseinheit 6 sowie eine Lagekorrektureinheit 8 auf. Die Druckmesszelle 2 ist mit der Signalverarbeitungseinheit 6 elektrisch verbunden. Der Lagesensor 3 ist mit der Lagekorrektureinheit 8 elektrisch verbunden. Wenn auf die Membran 10 der Druckmesszelle 2 ein Druck 12 ausgeübt wird, wird ein Druckmesszellensignal 14 von der Druckmesszelle 2 an die Signalverarbeitungseinheit 6 übermittelt. Die in der Auswerteeinheit 4 angeordnete Signalverarbeitungseinheit 6 erzeugt daraus ein erstes Signal 16, das an die Lagekorrektureinheit übermittelt wird. Der Lagesensor 3 misst die Lage der Druckmesszelle 2 relativ zur Richtung der Erdanziehungskraft und übermittelt diese Lage in Form eines zweiten Signals 18 an die Lagekorrektureinheit 8, die aus dem ersten Signal 16 und dem zweiten Signal 18 ein Ausgangssignal 20 erzeugt, welches den tatsächlich auf die Druckmesszelle 2 wirkenden Druck 12 angibt.

Figur 2 zeigt eine Kennlinie, die aus dem Lagewinkel 22 zwischen einer Ausgangslage 24, die in Richtung der Erdanziehungskraft weist, und einer aktuellen Richtung 26, in welche die Membran 10 weist, den Lagefehler 28 in Prozent abhängig vom Lagewinkel 22 in Grad angibt. Die Relation zwischen dem Lagewinkel 22 und dem Lagefehler 28 wird durch eine Kurve 30 bestimmt, die z.B. in der Lagekorrektureinheit 8 als Kennlinie hinterlegt sein kann und das erste Signal 16 mit der vom zweiten Signal 18 transportierten Lageinformation korrigiert.

Für einen maximalen Lagefehler $F_{Lage,max}$ von 100 %, der aus der Differenz zwischen dem gemessenen Druck der Druckmesszelle 2 in der Ausgangslage und dem gemessenen Druck 12 der Druckmesszelle 2 in einer zur Ausgangslage um 180° gedrehten Lage der Druckmesszelle 2 bestimmt wird, ergibt sich beispielweise der Lagefehler 28 $F_{Lage}$ in Abhängigkeit von dem Lagewinkel 22 α zwischen der Ausgangslage 24 und der Richtung 26, in welche die Membranfläche 10 der Druckmesszelle 2 weist, als der halbe maximale Lagefehler abzüglich des mit dem Kosinus des Lagewinkels multiplizierten halben Maximallagefehler:

$$F_{Lage} = \frac{F_{Lage,\max} - F_{Lage,\max} \times \cos(\alpha)}{2}$$

Figur 3 zeigt, wie die Druckmesszelle 2 zur Ausgangslage 24 ausgerichtet ist und den zwischen der aktuellen Richtung 26 der Druckmesszelle 2 und der Ausgangslage 24 ermittelten Lagewinkel 22.

Bezugszeichenliste

| | |
|---|---|
| 1 | Druckmessumformer |
| 2 | Druckmesszelle |
| 3 | Lagesensor |
| 4 | Signalverarbeitung, Auswerteeinheit |
| 6 | Signalverarbeitungseinheit |
| 8 | Lagekorrektureinheit |
| 10 | drucksensitive Fläche, Membran |
| 12 | Druck |
| 14 | Drucksmesszellensignal |
| 16 | erstes Signal |
| 18 | zweites Signal |
| 20 | Ausgangssignal |
| 22 | Lagewinkel |
| 24 | Ausgangslage |
| 26 | aktuelle Richtung |
| 28 | Lagefehler |
| 30 | Kurve |

**Patentansprüche**

1.   Verfahren zum Bestimmen des Drucks (12) mit einem Druckmessumformer (1), der eine Druckmesszelle (2), wenigstens einen Lagesensor (3), eine Auswerteeinheit (4), sowie einen Speicher aufweist, wobei die Auswerteeinheit (4) wenigstens eine Signalverarbeitungseinheit (6) und eine Lagekorrektureinheit (8) zur Ermittlung eines Lagefehlers (28) umfasst, wobei der wenigstens eine Lagesensor (3) relativ zur Druckmesszelle (2) unbeweglich angeordnet ist, wobei die Druckmesszelle (2) mit der Signalverarbeitungseinheit (6), und der wenigstens eine Lagesensor (3) mit der Lagekorrektureinheit (8) elektrisch verbunden ist, wobei von der Signalverarbeitungseinheit (6) ein, aus einem von der Druckmesszelle (2) bereitgestellten Signal (14), ermitteltes erstes Signal (16) bereitgestellt ist, von dem Lagesensor (3) ein zweites Signal (18) bereitgestellt ist, und von der Lagekorrektureinheit (8) ein, aus dem ersten und dem zweiten Signal (16, 18) ermitteltes, Ausgangssignal (20) bereitgestellt ist, wobei der wenigstens eine Lagesensor (3) ein Beschleunigungssensor ist und in den Speicher die Werte des zweiten Signals (18) als einzelne Ereignisse auslesbar abspeicherbar sind, aufweisend die folgenden Verfahrensschritte:

a) Messen eines auf die Druckmesszelle (2) einwirkenden Drucks (12), und Weiterleiten des von der Druckmesszelle (2) erzeugten Messsignals (14) an eine Signalverarbeitungseinheit (6),
b) Erzeugen eines ersten Signals (16) aus dem Messsignal (14) in der Signalverarbeitungseinheit (6) und Weiterleiten des erzeugten ersten Signals (16) an eine Lagekorrektureinheit (8),
c) Ermitteln der Lage (26) der Druckmesszelle (2) relativ zu einer Ausgangslage (24) der Druckmesszelle (2) mit einem, relativ zur Druckmesszelle unbeweglich angeordneten, als Beschleunigungssensor ausgebildeten Lagesensor (3), Erzeugen eines zweiten Signals (18) mit dem Lagesensor (3) aus der ermittelten Lage (26), Speichern des Wertes des zweiten Signals als einzelnes Ergebnis und Weiterleiten des von dem Lagesensor (3) erzeugten zweiten Signals (18) an die Lagekorrektureinheit (8),
d) Ermitteln eines korrigierten Ausgangssignals (20) aus dem ersten Signal (16) und dem zweiten Signal (18) in der Lagekorrektureinheit (8) und Bereitstellen des korrigierten Ausgangssignals (20),
**dadurch gekennzeichnet, dass** ein maximaler Lagefehler aus der Differenz zwischen dem gemessenen Druck der Druckmesszelle in der Ausgangslage (24) und dem gemessenen Druck der Druckmesszelle in einer zur Ausgangslage (24) um 180 Grad gedrehten Lage der Druckmesszelle (2) bestimmt wird, wobei die Ausgangslage (24) dadurch bestimmt wird, dass die drucksensitive Fläche (10) der Druckmesszelle (2) in Richtung der Erdanziehungskraft weisend ausgerichtet wird, und ein Lagewinkel (22) bestimmt wird, der sich aus dem Winkel zwischen der Ausgangslage (24) und einer aktuellen Richtung (26) der drucksensitiven Fläche (10) ergibt, und der Lagefehler (28) als Funktion des Lagewinkels (22) aus dem Wert ermittelt wird, der sich ergibt, wenn der halbe Wert des maximalen Lagefehlers multipliziert mit dem Kosinus des Lagewinkels (2) von dem halben Wert des maximalen Lagefehlers abgezogen wird.

2. Verfahren nach Anspruch 1, **dadurch gekennzeichnet, dass** die Druckmesszelle (2) vor dem ersten Schritt des Verfahrens in der Ausgangslage (24) kalibriert wird.

3. Verfahren nach einem der Ansprüche 1 bis 2, **dadurch gekennzeichnet, dass** das Ausgangssignal (20) und/oder das zweite Signal (18) als Funktion der Zeit abgespeichert wird/werden.

4. Verfahren nach einem der vorigen Ansprüche, **dadurch gekennzeichnet, dass** der Speicher ein nichtflüchtiger Speicher ist.

5. Verfahren nach einem der vorigen Ansprüche, **dadurch gekennzeichnet, dass** die Werte des zweiten Signals (18) als Funktion der Zeit in dem Speicher auslesbar abspeichert sind.

6. Verfahren nach einem der vorigen Ansprüche, **dadurch gekennzeichnet, dass** die Druckmesszelle (2) eine drucksensitive Fläche (10) aufweist, die eine Membran (10) ist, wobei die Druckmesszelle (2) eine kapazitive Druckmesszelle ist.

7. Verfahren nach einem der vorigen Ansprüche, **dadurch gekennzeichnet, dass** der wenigstens eine Lagesensor (3) an der Druckmesszelle (2) mit einem Fixiermittel befestigt ist.

8. Verfahren nach einem der vorigen Ansprüche, **dadurch gekennzeichnet, dass** die Druckmesszelle (2) wenigstens zwei Lagesensoren (3) aufweist, die relativ zueinander so angeordnet sind, dass der Neigungswinkel zwischen der Richtung der Erdanziehungskraft und der Richtung der drucksensitiven Fläche (26) der Druckmesszelle (2) in jeder Neigungsrichtung der Druckmesszelle (2) bestimmbar ist.

9. Verfahren nach einem der vorigen Ansprüche, **dadurch gekennzeichnet, dass** das Ausgangssignal (20), und/oder das erste Signal (16), und/oder das zweite Signal (18) mit einer Funkeinheit elektrisch verbunden ist.

**Claims**

1. Method for determining the pressure (12) with a pressure transducer (1) which has a pressure measuring cell (2), at least one position sensor (3), an evaluation unit (4), as well as a memory, wherein the evaluation unit (4) comprises at least one signal processing unit (6) and one position correction unit (8) for determining a position error (28), wherein the at least one position sensor (3) is arranged immovably relative to the pressure measuring cell (2), wherein the pressure measuring cell (2) is electrically connected to the signal processing unit (6), and the at least one position sensor (3) is electrically connected to the position correction unit (8), wherein a first signal (1), which is determined from a signal (14) provided by the pressure measuring cell (2), is provided by the signal processing unit (6), a second signal (18) is provided by the position sensor (3), and an output signal (20), which is determined from the first and the second signal (16, 18), is provided by the position correction unit (8), wherein the at least one position sensor (3) is an acceleration sensor and the values of the second signal (18) are able to be stored in the memory to be able to be read out as individual events, having the following method steps:

a) measuring a pressure (12) acting on the pressure measuring cell (2), and transferring the measurement signal (14) generated by the pressure measuring cell (2) to a signal processing unit (6),

b) generating a first signal (16) from the measurement signal (14) in the signal processing unit (6) and transferring the generated first signal (16) to a position correction unit (8),

c) determining the position (26) of the pressure measuring cell (2) relative to a starting position (24) of the pressure measuring cell (2) with a position sensor (3) which is arranged immovably relative to the pressure measuring cell and is formed as an acceleration sensor, generating a second signal (18) with the position sensor (3) from the determined position (26), storing the value of the second signal as an individual event and transferring the second signal (18) generated by the position sensor (3) to the position correction unit (8),

d) determining a corrected output signal (20) from the first signal (16) and the second signal (18) in the position correction unit (8) and providing the corrected output signal (20),
**characterised in that**
a maximum position error is determined from the difference between the measured pressure of the pressure measuring cell in the starting position (24) and the measured pressure in the pressure measurement cell in a position of the pressure measuring cell (2) which is rotated by 180 degrees with respect to the starting position (24), wherein the starting position (24) is determined by the pressure-sensitive surface (10) of the pressure measuring cell (2) being aligned facing the direction of the gravitational force, and a position angle (22) is determined which results from the angle between the starting position (24) and a current direction (26) of the pressure-sensitive surface (10), and the position error (28) is determined as a function of the position angle (22) from the value which results when the half value of the maximum position error multiplied with the cosine of the position angle (2) is subtracted from the half value of the maximum position error.

2. Method according to claim 1,
**characterised in that**
the pressure measuring cell (2) is calibrated in the starting position (24) before the first step of the method.

3. Method according to one of claims 1 to 2,
**characterised in that**
the output signal (20) and/or the second signal (18) is/are stored as a function of time.

4. Method according to one of the preceding claims.
**characterised in that**
the memory is a non-volatile memory.

5. Method according to one of the preceding claims,
**characterised in that**
the values of the second signal (18) are stored as a function of time to be able to be read out in the memory.

6. Method according to one of the preceding claims,
**characterised in that**
the pressure measuring cell (2) has a pressure-sensitive surface (10) which is a membrane (10), wherein the pressure measuring cell (2) is a capacitive pressure measuring cell.

7. Method according to one of the preceding claims,
**characterised in that**
the at least one position sensor (3) is attached to the pressure measuring cell (20) by a fixing means.

8. Method according to one of the preceding claims,
**characterised in that**
the pressure measuring cell (2) has at least two position sensors (3) which are arranged relative to each other in such a way that the angle of inclination between the direction of gravitational force and the direction of the pressure-sensitive surface (26) of the pressure measurement cell (2) is able to be determined in any direction of inclination of the pressure measurement cell (2).

9. Method according to one of the preceding claims,
**characterised in that**
the output signal (20), and/or the first signal (16), and/or the second signal (18) is electrically connected to a radio unit.

**Revendications**

1. Procédé permettant de déterminer la pression (12) avec un convertisseur de pression (1) qui comprend une cellule de mesure de la pression (2), au moins un capteur de position (3), une unité d'exploitation (4) ainsi qu'une mémoire,

l'unité d'exploitation (4) comprenant au moins une unité de traitement de signaux (6) et une unité de correction de position (8) pour permettre de déterminer une erreur de position (28), le capteur de position (3) étant monté non mobile par rapport à la cellule de mesure de la pression (2), la cellule de mesure de la pression (2) étant reliée électriquement avec l'unité de traitement de signaux (6) et le capteur de position (3) étant relié électriquement à l'unité de correction de position (8), l'unité de traitement de signaux (6) fournissant un premier signal (16) obtenu à partir d'un signal (14) fourni par la cellule de mesure de pression (2), le capteur de position (3) fournissant un second signal (18), et l'unité de correction de position (8) fournissant un signal de sortie (20) obtenu à partir du premier signal (16) et du second signal (18), le capteur de position (3) étant un capteur d'accélération et dans la mémoire, les valeurs du second signal (18) pouvant être enregistrées et extraites en tant qu'évènement séparé, procédé comprenant les étapes suivantes consistant à :

> a) mesurer une pression (12) agissant sur la cellule de mesure de la pression (2) et transmettre le signal de mesure (14) génère par la cellule de mesure de la pression (2) à une unité de traitement de signaux (6),
>
> b) générer un premier signal (16) à partir du signal de mesure (14) dans l'unité de traitement de signaux (6) et transmettre le premier signal (16) génère à une unité de correction de position (8),
>
> c) déterminer la position (26) de la cellule de mesure de la pression (2) relativement à la position initiale (24) de la cellule de mesure de la pression (2) avec un capteur de position (3) monté non mobile par rapport à la cellule de mesure de la pression, et réalisé sous la forme d'un capteur d'accélération, générer un second signal (18) avec le capteur de position (3) à partir de la position (26) déterminée, enregistrer la valeur du second signal en tant qu'évènement séparé et transmettre le second signal (18) généré par le capteur de position (3) à l'unité de correction de position (8),
>
> d) déterminer un signal initial corrigé (20) à partir du premier signal (16) et du second signal (18) dans l'unité de correction de position (8), et fournir ce signal de sortie corrigé (20),
>
> **caractérisé par** les étapes suivantes consistant à :
>
> > déterminer une erreur de position maximum à partir de la différence entre la pression mesurée par la cellule de mesure de la pression située dans la position initiale (24) et la pression mesurée par la cellule de mesure de la pression située dans une position dans laquelle elle est tournée de 180 degrés par rapport à la position initiale (24), la position initiale (24) étant déterminée en orientant la surface sensible à la pression (10) de la cellule de mesure de la pression (2) en direction de la force de gravité, et déterminer un angle de position (22) qui résulte de l'angle entre la position initiale (24) et l'orientation actuelle (26) de la surface sensible à la pression (10) et déterminer l'erreur de position (28) en tant que fonction de l'angle de position (22) à partir de la valeur obtenue en retranchant la moitié de la valeur de l'erreur de position maximum est multipliée par le cosinus de l'angle de position (2) de la moitié de la valeur de l'erreur de position maximum.

2. Procédé conforme à la revendication 1,
   **caractérisé en ce que**
   la cellule de mesure de la pression (2) est calibrée dans la position initiale (24) avant la mise en oeuvre de la première étape du procédé.

3. Procédé conforme à l'une des revendications 1 et 2,
   **caractérisé en ce que**
   le signal de sortie (20) et/ou le second signal (18) est(sont) enregistré(s) en fonction du temps.

4. Procédé conforme à l'une des revendications précédentes, **caractérisé en ce que**
   la mémoire est une mémoire non volatile.

5. Procédé conforme à l'une des revendications précédentes,
   **caractérisé en ce que**
   les valeurs du second signal (18) sont enregistrées dans la mémoire en pouvant être extraites en fonction du temps.

6. Procédé conforme à l'une des revendications précédentes,
   **caractérisé en ce que**
   la cellule de mesure de la pression (2) comprend une surface sensible à la pression (10) constituée par une membrane (10), la cellule de mesure de la pression (2) étant une cellule de mesure de la pression capacitive.

7. Procédé conforme à l'une des revendications précédentes,
   **caractérisé en ce que**
   le capteur de position (3) est fixé à la cellule de mesure de la pression (2) par des moyens de fixation.

**8.** Procédé conforme à l'une des revendications précédentes,
**caractérisé en ce que**
la cellule de mesure de la pression (2) comprend au moins deux capteurs de pression (3) qui sont installés l'un par rapport à l'autre de sorte que l'angle d'inclinaison entre la direction de la force de gravité et la direction de la surface sensible à la pression (26) de la cellule de mesure de la pression (2) puisse être déterminé dans chaque direction d'inclinaison de la cellule de mesure de la pression (2).

**9.** Procédé conforme à l'une des revendications précédentes,
**caractérisé en ce que**
le signal de sortie (20) et/ou le premier signal (16) et/ou le second signal (18) est(sont) relié(s) électriquement à une unité radio.

Fig. 1

Fig. 2

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009101566 A1
- US 20100154552 A1
- US 20130305840 A1